# EUROPEAN PATENT SPECIFICATION

(11) **EP 1 949 601 B1**
(45) Date of publication and mention of the grant of the patent: **13.11.2013**
(21) Application number: 06821404.8
(22) Date of filing: 13.11.2006
(51) Int. Cl.: H04L 12/28, H02J 3/14, H02J 13/00, G05B 19/042

(54) **A HOME AUTOMATION SYSTEM**
HAUSAUTOMATISIERUNGSSYSTEM
SYSTEME DOMOTIQUE

(30) Priority: 14.11.2005 TR 200504496
(43) Date of publication of application: 30.07.2008
(73) Proprietor: Arçelik Anonim Sirketi, 34950 Istanbul (TR)
(72) Inventor: KARAASLAN, Kuntay, 34950 Istanbul (TR); BAYKUT, Alper, 34950 Istanbul (TR); YUKSEL, Mustafa, 34950 Istanbul (TR); TACAN, Ilkin, 34950 Istanbul (TR)
(86) International application number: PCT/IB2006/054210
(87) International publication number: WO 2007/054914

(56) References cited:
- EP-A1- 1 338 935
- WO-A-01/15300
- US-A1- 2001 025 349

## Description

This invention relates to a home automation system wherein means are provided to remotely monitor and control household appliances, which actually do not incorporate the necessary hardware for remote control.

Most of the home appliances such as washing machine, dishwasher, oven, coffee machine, kettle etc. utilized in houses are not capable of wired or wireless communication. Therefore, this type of household appliances cannot receive instructions sent from an outer source such as a home automation center and can not transmit data to outside.

In the current state of the art, in the United States Patent Document no US 5710691, a modular, programmable control unit which, if plugged, is able to analyze the withdrawn current so as to protect the connected device, has been described.

In the current state of the art, in the United States Patent Application no. US 2002086567, a plug-and-play modular junction box receptacle which may be utilized as a switch or a receptacle and which incorporates wired and wireless connection, management unit interface, computer interface, security interface, automation interface, monitorable service outlet, network receiver etc. features, has been described.

In the current state of the art, in the German Patent Document no. DE 19713686, an indicator unit for household appliances, which may also function without being connected to the household appliance, has been described.

In the current state of the art, in the European Patent Document no. EP 0825503, a connection circuit that provides the household appliance to be switched on and off by monitoring its electrical connections, has been described.

WO 01115300 A1 discloses a home automation system providing remote control of household appliances originally not incorporating remote monitoring and control abilities. To this end, at least one control unit and at least one connection device is provided and connected to the plug of the household appliance and communicates with the control unit via network. The connection device incorporates a control card for monitoring an operation profile of the household appliance and comparing a current profile of the household appliance with a predetermined expected current profile. Via a switch the type and model of the connected household appliance can be selected.

From US 2001/025349 A1, wireless communication between a retro fit plug for monitoring a household appliance is known. In particular, a control server or a remote monitoring service is able to perform diagnostic interpretation about the appliance. In this manner, the health of the appliance can be determined, further it can be determined the appliance's current function (e.g. how many burners are on, oven capacity, temperature monitoring in a refrigerator, and washer and dryer cycles including length) and as well device failure can be determined.

The aim of the present invention is the realization of a home automation system whereby means are provided to determine the operation and/or standby order of the household appliances when more than one household appliance are to be operated simultaneously.

The home automation system realized in order to fulfill the objectives of the present invention is described in the first claim and the other features are described in the dependent claims.

In the embodiment of the present invention, the home automation system comprising at least one central control unit and at least one connection device connected to one or more household appliances, determines whether or not to operate the household appliances or to keep one or more household appliances in standby mode until the operation of the other ends, according to the current withdrawn, if more than one household appliance is to be operated at the same time.

By means of the present invention, household appliances which originally do not incorporate necessary features to be remotely monitored and controlled are enabled to be remotely monitored and controlled via an external connection device connected to the said household appliance without changing the structure of the household appliance.

The home automation system realized in order to fulfill the objectives of the present invention is illustrated in the attached figures where:

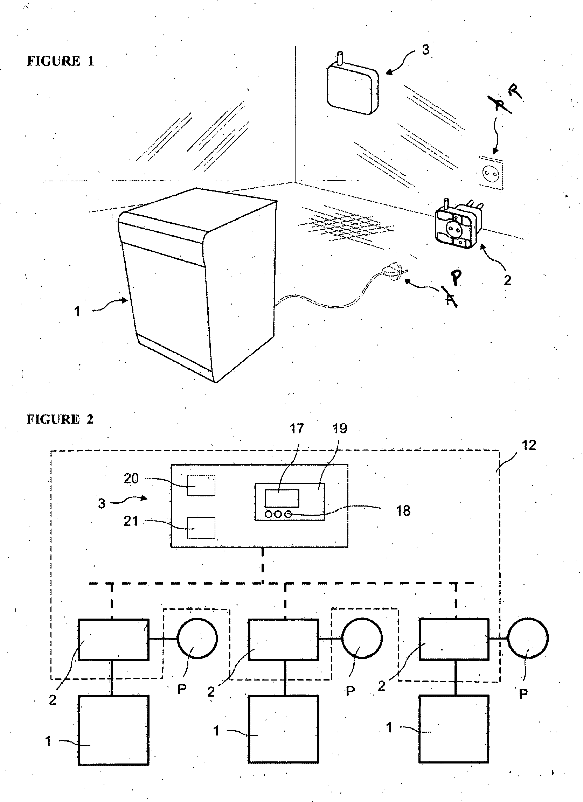

Fig.1 - is a perspective view of a household appliance, a connection device and a central control unit.
Fig.2 - is a schematic representation of a home automation system and household appliances connected thereto.

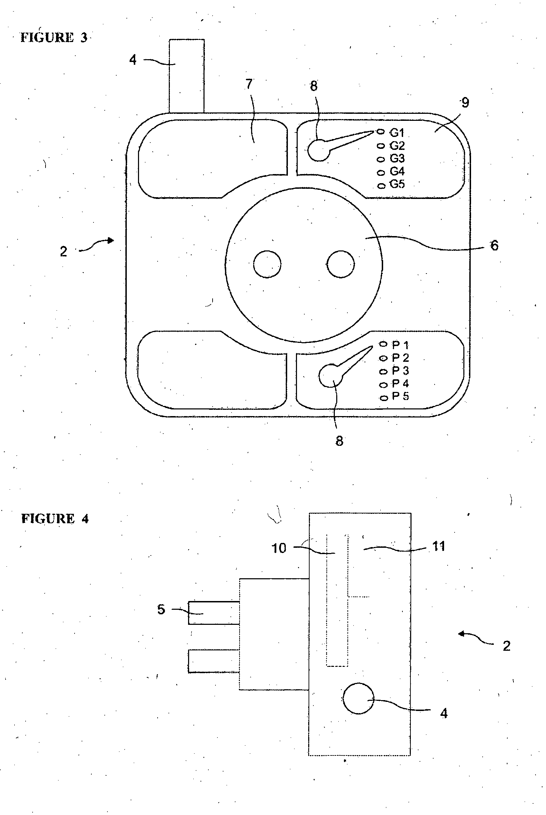

Fig.3 - is a front view of a connection device.
Fig.4 - is a side view of a connection device.

Elements shown on figures are numbered as follows:
1. Household appliance
2. Connection device
3. Central control unit
4. Antenna
5. Terminal
6. Socket
7, 17. Screen
8, 18. Switch
9, 19. Panel
10, 20. Control card
11, 21. Memory
12. Home automation system

Household appliances (1) operate as connected to the network by means of a plug (P) attached to a receptacle (R) communicating with said network. Remote control of household appliances (1) particularly not having necessary abilities to be remotely monitored and controlled is achieved by means of a home automation system (12). Said home automation system (12) comprises at least one central control unit (3) located inside the house and at least one connection device (2) which is controlled by the mentioned central control unit (3) and which is attached to a receptacle (R) connected to the network, where the plug (P) of the household appliance (1) is attached onto and whereby the type of the connected household appliance (1) and the programs to be used in operating the said household appliance (1) are selected and this information is transmitted to the central control unit (3).

The home automation system (12) in accordance with the present invention controls the household appliance (1) connected to the connection device (2) by means of the central control unit (3) used to control the said connection device (2).

The central control unit (3) comprises at least one memory (21) whereby the data received from the connection device (2) may permanently or temporarily be stored and a control card (20) whereby the current variation curves - determined per unit time - of all of the household appliances (1) to be operated are superimposed and if the maximum value of the current withdrawn during the possible operation period of household appliances (1) operating at the same time is larger than the maximum current value below which the network providing the electricity and other electrical equipment can operate without being harmed, the order and operation durations of household appliances (1) are arranged such that the network and the electrical equipments are not damaged, said household appliances being either stopped or kept in standby mode if necessary, if more than one household appliance (1) is to be operated at the same time wherein with which one of the operation profiles (P1, P2, P3, P4, P5, ...) previously determined by the manufacturer and composed of current variation curves, the mentioned household appliances (1) operate is a known fact. The connection device (2) comprises at least one antenna (4) enabling the communication with the central control unit (3), a socket (6) whereby the plug (P) of the household appliance (1) is attached onto, more than one terminal (5) transferring the voltage supplied by the network to the socket (6) by being fitted to the network receptacle (R), at least one switch (8) whereby the type (Gij, i=1,2...) and model (Gij, j=1,2...) of the connected household appliance (1) is selected, and for this selected household appliance (1), one of the operation profiles (P1, P2, P3, P4, P5,...) determined by the manufacturer is chosen and, a control card (10) enabling the data transfer with the household appliance (1) and the central control unit (3).

In the embodiment according to the present invention, by means of the afore-mentioned switch (8), the user is enabled to choose among various household appliances (1) such as oven (G1, j), dryer (G2, j), washing machine (G3, j), dishwasher (G4,j) or refrigerator (G5,j) and various operation profiles (P1, P2, P3, P4, P5) for these mentioned household appliances (1). For instance, for the model number "2" of a washing machine (G3, 2), such operation profiles as the profile with pre-washing (P1), the profile without pre-washing (P2), rinsing profile (P3) or squeezing profile (P4) are recorded to the memory (21) by the manufacturer and are selected by the user via the switch (8).

In the present invention, the afore-mentioned profiles (P1, P2, P3, P4, P5...) are composed of curves of current variations. Thereby, curves formed by the current variations (Pactual) during the operation of the household appliance (1) can be compared with the expected current variations (Pexpected) defined by the manufacturer as determining the profiles (P1, P2, P3, P4, P5,..).

In the home automation system of the present invention, the central control unit (3) comprises a control card (20) whereby the operation profile (P1, P2, P3, P4, P5...) of the household appliance (1) chosen by the user via the switch (8) and the current variation (Pactual) during the operation of the household appliance (1) are monitored, said current variation (Pactual) being temporarily recorded to the memory (21) and, whereby the operation profile (P1, P2, P3, P4, P5,..) pre-determined by the manufacturer or the user and recorded to the memory (21) is compared with the current variation curve (Pactual), wherein if there is difference, the user is warned of the case of a probable error and/or if desired, it is possible to record as a new profile in case a different profile is obtained compared to the previous operation profiles (P1, P2, P3, P4, P5,..).

In one embodiment, the connection device (2) incorporates at least one memory (11) used to record the data, at least one screen (7) where necessary information is illustrated to the user and, at least one panel (9) whereon the mentioned screen (7), the switch (8) and the options among which the user may select either one via said switch (8) are positioned.

In another embodiment, the central control unit (3) incorporates at least one switch (18) by means of which the user may choose, at least one screen (17) where necessary information is illustrated to the user and, at least one panel (19) whereon the mentioned screen (17), the switch (18) and the options among which the user may select either one via said switch (18) are positioned.

Presently, it is controlled whether the household appliance (1) and the operation profile is selected, wherein by keeping one or more household appliances (1) to be operated in standby mode according to the measured current value, such electrical equipment as cable, fuse etc. and the network is prevented from being damaged because of excessive current withdrawing, wherein possible failure during operation is predicted by comparing the monitored current data of the household appliance (1) permitted to operate with the data determined by the manufacturer and wherein, if desired, current profiles observed during the operation of the household appliance (1) different than the previously recorded profiles are stored and may be utilized during later operation period of the household appliance (1).

By means of the embodiment according to the present invention, it is accomplished to remotely control household appliances (1) which originally do not incorporate necessary means to be remotely monitored and controlled and if necessary, to warn the user accordingly. Moreover, if the user desires to operate the household appliance (1), means are provided to compare the profile of the household appliance (1) selected via the switch (8) with the data previously recorded by the manufacturer wherein by means of the comparison data and the previously recorded information, the operation period and the necessary current to be withdrawn is determine. If the user desires to operate more than one household appliance (1) at the same time, it is achieved to operate the household appliances (1) in proper time intervals such that electrical equipment and the network is prevented from being damaged as a result of the excessive current which may be withdrawn by the household appliances (1) operating at the same time.

## Claims

1. A home automation system (12) providing the remote control of a household appliance (1) originally not incorporating necessary abilities to be remotely monitored and controlled, at least one central control unit (3) located inside a house and at least one connection device (2) incorporating at least one antenna (4) enabling the communication with the central control unit (3), a socket (6) whereby a plug (P) of the household appliance (1) is attached onto more than one terminal (5) transferring the voltage supplied by a network to the socket (6) by being fitted to a network receptacle (R), the connection device being controlled by the mentioned central control unit (3), attached to the receptacle (R) connected to the network, whereon the plug (P) of the household appliance (1) is connected and whereby the type of the connected household appliance (1) and the programs that may be utilized to operate said household appliance (1) are selected and this information is transferred to said central control unit (3), whereby
the connection device (2) incorporates at least one switch (8) for selecting the type (Gij, i=1,2...) and model (Gij, j=1,2,...) of the connected household appliance (1) and for choosing one of the operation profiles (P1, P2, P3, P4, P5,...) determined by the manufacturer for this selected type and model of household appliance (1) and further incorporates a first control card (10) for enabling data transfer with the household appliance (1) and the central control unit (3); and
the central control unit (3) incorporates a second control card (20) adapted to monitoring the operation profile (P1, P2, P3, P4, P5...) of the type and model of household appliance (1) chosen by the user via the switch (8) and the current variation (Pactual) during the operation of the household appliance (1), for temporarily recording said current variation (Pactual) to a memory (21) and for comparing the operation profile (P1, P2, P3, P4, P5,..) (Pexpected) pre-determined by the manufacturer or a user and recorded to the memory (21) with the current variation curve (Pactual).

2. A home automation system (12) as described in Claim 1, **characterized by** the central control unit (3) incorporating at least the memory (21) whereby the data received from the connection device (2) can permanently or temporarily be stored and the second control card (20) whereby the current variation curves, determined per unit time, of all of the household appliances (1) to be operated are superimposed and if the maximum value of the current withdrawn during the possible operation period of household appliances (1) operating at the same time is larger than the maximum current value below which the network providing the electricity and electrical equipments can operate without being harmed, the order and operation durations of household appliances (1) are arranged such that the network and electrical equipments are not damaged, said household appliances being either stopped or kept in standby mode if necessary, if more than one household appliance (1) is to be operated at the same time wherein with which one of the operation profiles (P1, P2, P3, P4, P5, ...) previously determined by the manufacturer and composed of current variation curves, the mentioned household appliances (1) operate is a known fact.

3. A home automation system (12) as described in Claim 1 or 2, **characterized by** the connection device (2) incorporating at least one memory (11) used to record data, at least one screen (7) where necessary information is illustrated to the user and, at least one panel (9) whereon the mentioned screen (7), the switch (8) and the options among which the user may select either one via said switch (8) are positioned.

4. A home automation system (12) as described in Claim 1, **characterized by** the central control unit (3) incorporating the second control card (20) wherein if there is difference between the operation profile (P1, P2, P3, P4, P5,..) pre-determined by the manufacturer or the user and recorded to the memory (21) and the current variation curve (Pactual), the user is warned for the case of a probable error and/or if desired, it is possible to record said current variation (Pactual) as a new profile in case a different profile is obtained compared to the previous operation profiles (P1, P2, P3, P4, P5...).

5. A home automation system (12) as described in any of the above Claims, **characterized by** the central control unit (3) incorporating at least one switch (18) by means of which the user may choose, at least one screen (17) where necessary information is illustrated to the user and, at least one panel (19) whereon the mentioned screen (17), the switch (18) and the options among which the user may select either one via said switch (18) are positioned.

## Patentansprüche

1. Heimautomatisierungssystem (12), das Folgendes bereitstellt: die Fernsteuerung eines Haushaltsgeräts (1) ermöglicht, das urpsrünglich nicht über die notwendigen Fähigkeiten verfügt, um aus der Ferne überwacht und gesteuert zu werden, wenigstens eine zentrale Steuereinheit (3), die innerhalb eines Gehäuses angeordnet ist, und wenigstens eine Verbindungsvorrichtung (2) mit wenigstens einer Antenne (4), die die Kommunikation mit der zentralen Steuereinheit (3) ermöglicht, eine Buchse (6), über die ein Stecker (P) des Haushaltsgeräts (1) an mehr als einem Anschluss (5) angebracht wird, der die Spannung, die von einem Netzwerk bereitgestellt wird, an die Buchse (6) überträgt, indem er mit einer Netzwerkaufnahmebuchse (R) zusammengefügt ist, wobei die Verbindungsvorrichtung (2) durch die zentrale Steuereinheit (3) gesteuert wird, die an der mit dem Netzwerk verbundenen Aufnahmebuchse (R) angebracht ist, mit der der Stecker (P) des Haushaltsgeräts (1) verbunden ist, und wodurch der Typ des verbundenen Haushaltsgeräts (1) und die Programme, die benutzt werden können, um das Haushaltsgerät (1) zu bedienen, ausgewählt werden, und diese Informationen an die zentrale Steuereinheit (3) übertragen werden, wobei die Verbindungsvorrichtung (2) wenigstens einen Schalter (8) zum Auswählen des Typs (Gij, i=1,2...) und des Modells (Gij, j=1,2...) des verbundenen Haushaltsgeräts (1) und zum Wählen eines der Betriebsprofile (P1, P2, P3, P4, P5...) aufweist, die von dem Hersteller für den ausgewählten Typ und das Modell des Haushaltsgeräts (1) bestimmt werden, und ferner eine erste Steuerkarte (10) zum Ermöglichen der Datenübertragung mit dem Haushaltsgerät (1) und der zentralen Steuereinheit (3) aufweist; und
die zentrale Steuereinheit (3) eine zweite Steuerkarte (20) aufweist, die dazu ausgebildet ist, das Betriebsprofil (P1, P2, P3, P4, P5...) des Typs und Modells des Haushaltsgeräts (1), das von dem Benutzer über den Schalter (8) ausgewählt wird, und die Stromschwankung (Pactual) während des Betriebs des Haushaltsgeräts (1) überwacht, um die Stromschwankung (Pactual) vorübergehend in einem Speicher (21) aufzuzeichnen und das Betriebsprofil (P1, P2, P3, P4, P5...) (Pexpected), das vom Hersteller oder einem Benutzer im Voraus bestimmte wurde und im Speicher (21) aufgezeichnet wurde, mit der Stromschwankungskurve (Pactual) zu vergleichen.

2. Heimautomatisierungssystem (12) nach Anspruch 1, **dadurch gekennzeichnet, dass** die zentrale Steuereinheit (3) wenigstens den Speicher (21), wodurch die Daten, die von der Verbindungsvorrichtung (2) empfangen werden, dauerhaft oder vorübergehend gespeichert werden können, und die zweite Steuerkarte (20) aufweist, wodurch die Stromschwankungskurven, die pro Zeiteinheit bestimmt werden, aller zu bedienenden Haushaltsgeräte (1) überlagert werden, und wenn der Maximalwert des während der möglichen Betriebsdauer von Haushaltsgeräten (1), die gleichzeitig betrieben werden, verbrauchten Stroms, größer als der Maximalstromwert ist, unter dem das Netz, das die Elektrizität bereitstellt, und elektrische Ausrüstung unbeschädigt betrieben werden können, die Reihenfolge und Betriebsdauer der Haushaltsgeräte (1) derart angeordnet wird, dass das Netz und die elektrische Ausrüstung nicht beschädigt werden, wobei die Haushaltsgeräte (1) bei Bedarf entweder angehalten oder im Bereitschaftsmodus gehalten werden, wenn mehr als ein Haushaltsgerät (1) gleichzeitig betrieben werden soll, wobei bekannt ist, mit welchem der Betriebsprofile (P1, P2, P3, P4, P5...), die zuvor vom Hersteller bestimmt wurden und aus Stromschwankungskurven zusammengestezt sind, das Haushaltsgerät (1) betrieben wird.

3. Heimautomatisierungssystem (12) nach Anspruch 1 oder 2, **dadurch gekennzeichnet, dass** die Verbindungsvorrichtung (2) wenigstens einen Speicher (11), der dazu dient, Daten aufzuzeichnen, wenigstens einen Bildschirm (7), auf dem notwendige Informationen dargestellt werden, und wenigstens ein Bedienfeld (9) aufweist, an dem der Bildschirm (7), der Schalter (8) und die Optionen angeordnet sind, unter denen der Benutzer über den Schalter (8) eine auswählen kann.

4. Heimautomatisierungssystem (12) nach Anspruch 1, **dadurch gekennzeichnet, dass** die zentrale Steuereinheit (3) die zweite Steuerkarte (20) aufweist, wobei dann, wenn eine Differenz zwischen dem Betriebsprofil (P1, P2, P3, P4, P5...), das vom Hersteller oder dem Benutzer bestimmt wird und das im Speicher (21) aufgezeichnet ist, und der Stromschwankungskurve (Pactual) vorliegt, der Benutzer für den Fall eines möglichen Fehlers gewarnt wird und/oder es bei Bedarf möglich ist, die Stromschwankung (Pactual) als ein neues Profil aufzuzeichnen, falls ein anderes Profil im Vergleich zu den vorherigen Betriebsprofilen (P1, P2, P3, P4, P5...) erlangt wird.

5. Heimautomatisierungssystem (12) nach einem der vorangehenden Ansprüche, **dadurch gekennzeichnet, dass** die zentrale Steuereinheit (3) wenigstens einen Schalter (18), durch den der Benutzer den Typ und das Modell des Haushaltsgeräts (1) und eines der Betriebsprofile (P1, P2, P3, P4, P5...) wählen kann, wenigstens einen Bildschirm (17), auf dem für den Benutzer die notwendigen Informationen dargestellt werden, und wenigstens ein Bedienfeld (19) aufweist, an dem der Bildschirm (17), der Schalter (18) und die Optionen angeordnet sind, unter denen der Benutzer über den Schalter (18) eine auswählen kann.

## Revendications

1. Un système de domotique (12) permettant la commande à distance d'un électroménager (1) qui n'a pas à l'origine des capacités requises pour être surveillé et commandé à distance, au moins une unité centrale de commande (3) qui est située dans une maison et au moins un dispositif de connexion (2) avec au moins une antenne (4) qui permet la communication avec l'unité centrale de commande (3), une douille (6) par laquelle une fiche (P) de l'électroménager (1) est attachée sur plus d'une borne (5) qui transfère la tension fournie par le réseau à la douille (6) en étant reliée à un réceptacle de réseau (R) ; le dispositif de connexion (2) étant commandé par ladite unité centrale de commande (3), attaché au réceptacle (R) qui est relié au réseau, sur lequel la fiche (P) de l'électroménager (1) est reliée et par lequel le type de l'électroménager (1) connecté et les programmes qui peuvent être utilisés pour faire fonctionner ledit électroménager (1) sont sélectionnés et ces informations sont transférées à ladite unité centrale de commande (3), où
le dispositif de connexion (2) comporte au moins un interrupteur (8) pour la sélection du type (Gij, i=1,2...) et le modèle (Gij, j=1,2,...) de l'électroménager (1) connecté et pour la sélection de l'un des profils de fonctionnement (P1, P2, P3, P4, P5,...) déterminés par le fabricant pour ce type et modèle sélectionnés de l'électroménager (1) et comporte en outre une première carte de commande (10) pour permettre le transfert de données avec l'électroménager (1) et l'unité centrale de commande (3) ; et
l'unité centrale de commande (3) comporte une deuxième carte de commande (20) adaptée à surveiller le profil de fonctionnement (P1, P2, P3, P4, P5...) du type et modèle de l'électroménager (1) sélectionnés par l'utilisateur via l'interrupteur (8) et la variation du courant (Pactual) pendant le fonctionnement de l'électroménager (1) pour enregistrer temporairement ladite variation du courant (Pactual) dans une mémoire (21) et pour comparer le profil de fonctionnement (P1, P2, P3, P4, P5,..) (Pexpected) prédéterminé par le fabricant ou par l'utilisateur et enregistré dans le mémoire (21) avec la courbe de variation du courant (Pactual).

2. Un système de domotique (12) selon la Revendication 1, **caractérisé par** l'unité centrale de commande (3) comportant au moins une mémoire (21) où les données reçues du dispositif de connexion (2) peuvent être enregistrées en permanence ou temporairement et la deuxième carte de commande (20) par laquelle les courbes de variation du courant, déterminées par unité de temps, de tous électroménagers (1) à être fonctionnés sont superposées et si la valeur maximale du courant tiré pendant la période de fonctionnement possible des électroménagers (1) qui se fonctionnement en même temps est supérieure à la valeur maximale de courant en dessous de laquelle le réseau fournissant l'électricité et des équipements électriques peuvent fonctionner sans être endommagés, l'ordre et la période de fonctionnement des électroménagers (1) sont déterminés de telle sorte que le réseau et des équipement électriques ne sont pas endommagés, ledit électroménager (1) étant arrêté ou maintenu en mode veille si nécessaire, s'il faut fonctionner plus d'un électroménager (1) en même temps où l'un des profils de fonctionnement (P1, P2, P3, P4, P5, ...) prédéterminés par le fabricant et composés des courbes de variation du courant, avec lequel lesdits électroménagers (1) opèrent est un fait connu.

3. Un système de domotique (12) selon la Revendication 1 ou 2, **caractérisé par** le dispositif de connexion (2) comportant au moins une mémoire (11) qui est utilisée pour enregistrer des données, au moins un écran (7) où les informations nécessaires sont affichées à l'utilisateur, et au moins un panneau (9) sur lequel ledit écran (7), l'interrupteur (8) et les options parmi lesquelles l'utilisateur peut sélectionner par ledit interrupteur (8) sont positionnés.

4. Un système de domotique (12) selon la Revendication 1, **caractérisé par** l'unité centrale de commande (3) comportant la deuxième carte de commande (20), où si il y a une différence entre le profil de fonctionnement (P1, P2, P3, P4, P5,..) prédéterminé par le fabricant ou l'utilisateur et enregistré dans la mémoire (21) et la courbe de variation du courant (Pactual), l'utilisateur est averti contre une erreur probable et/ou si on le souhaite, il est possible d'enregistrer ladite variation du courant (Pactual) comme un nouveau profil dans le cas où un profil différent est obtenu par rapport aux profils précédents de fonctionnement (P1, P2, P3, P4, P5...).

5. Un système de domotique (12) selon l'une quelconque des revendications précédentes, **caractérisé par** l'unité centrale de commande (3) comportant au moins un interrupteur (18) par lequel l'utilisateur peut sélectionner le type et modèle de l'électroménager (1) et un des profils de fonctionnement (P1, P2, P3, P4, P5,...), au moins un écran (17) où les informations nécessaires sont affichées à l'utilisateur, et au moins un panneau (19) sur lequel ledit écran (17), l'interrupteur (18) et les options parmi lesquels l'utilisateur peut sélectionner par ledit interrupteur (18) sont positionnés.
